# EUROPÄISCHE PATENTSCHRIFT

(11) **EP 2 874 855 B1**
(45) Veröffentlichungstag und Bekanntmachung des Hinweises auf die Patenterteilung: **28.08.2019**
(21) Anmeldenummer: 13729262.9
(22) Anmeldetag: 11.06.2013
(51) Int. Cl.: B60T 7/12, B60T 7/20, B60T 8/17, B60T 8/1755, B60T 8/18, B60T 8/24, B60T 8/32

(54) **VERFAHREN ZUM ABBREMSEN EINER KOMBINATION VON MEHREREN MITEINANDER GEKOPPELTEN FAHRZEUGEN**
METHOD FOR BRAKING A COMBINATION OF A PLURALITY OF VEHICLES COUPLED TO ONE ANOTHER
PROCÉDÉ DE FREINAGE D'UN ENSEMBLE DE PLUSIEURS VÉHICULES ATTELÉS LES UNS AUX AUTRES

(30) Priorität: 19.07.2012 DE 102012014408
(43) Veröffentlichungstag der Anmeldung: 27.05.2015
(73) Patentinhaber: WABCO GmbH, 30453 Hannover (DE)
(72) Erfinder: RISSE, Rainer, 30982 Pattensen-Reden (DE); STENDER, Axel, 31787 Hameln (DE); WOLF, Markus, 31137 Hildesheim (DE)
(74) Vertreter: Lauerwald, Jörg
(86) Internationale Anmeldenummer: PCT/EP2013/001705
(87) Internationale Veröffentlichungsnummer: WO 2014/012609

(56) Entgegenhaltungen:
- EP-A1- 1 407 948
- EP-A1- 1 459 949
- EP-A2- 1 104 732
- EP-A2- 1 142 768
- EP-A2- 1 510 374
- DE-A1- 10 128 692
- GB-A- 2 447 689
- US-B1- 6 225 894

## Beschreibung

Die Erfindung betrifft ein Verfahren gemäß dem Oberbegriff des Anspruchs 1. Daneben betrifft die Erfindung ein Bremssystem für ein Fahrzeug.

Lastzüge, bestehend aus Zugfahrzeug und einem oder mehreren Anhängerfahrzeugen, sind vorzugsweise mit einem elektropneumatischen Bremssystem ausgestattet, bei dem der Fahrer des Zugfahrzeugs durch Betätigung des Bremspedals ein elektronisches Signal erzeugt, welches über eine Datenschnittstelle einer elektronischen Schalteinheit (ECU) zugeführt und von dort aus zu Modulatoren zur Betätigung elektropneumatischer Bremsen gelangt. In Verbindung mit Raddrehzahlsensoren und weiteren im Fahrzeug vorhandenen Sensoren, etwa für die Ermittlung einer Querbeschleunigung, sind zahlreiche Sicherheitsfunktionen realisiert, zum Beispiel ein Antiblockiersystem und ein Stabilitätssystem zum Erkennen einer Umkippgefahr. Letzteres kann nicht nur aus der Querbeschleunigung, sondern auch aus Raddrehzahlmessungen abgeleitet werden.

Auch Anhängerfahrzeuge sind mit einer ECU mit passender Datenschnittstelle ausgestattet und empfangen darüber das Bremssignal des Zugfahrzeugs. Zugleich kann das Anhängerfahrzeug mit seiner eigenen ECU und angeschlossenen Sensoren und Modulatoren eigenständig Bremsvorgänge beeinflussen oder auslösen, insbesondere in Abhängigkeit von blockierenden Rädern und bei drohender Umkippgefahr.

Für den europäischen Markt vorgesehene Fahrzeuge sind typischerweise mit dem sogenannten CAN-Bus zur Übertragung von Daten auf einer separaten Datenleitung versehen. Dabei ermöglichen vorzugsweise ein oder mehrere CAN-Router die Datenübertragung an mehr als ein anderes Fahrzeug und/oder an mehrere Modulatoren sowie die Spannungsversorgung angeschlossener Bremsgeräte. Letztere sind die ECUs zur Ansteuerung der Modulatoren für die Betätigung der Bremsen. Im nordamerikanischen Markt hat sich als Standard für die Datenübertragung im Fahrzeug der sogenannte PLC-Bus (Power Line Carrier) etabliert. Dabei wird ein hochfrequentes Signal auf einer ohnehin vorhandenen Versorgungsleitung übertragen. Beide Systeme sind zur Weiterleitung der Bremssignale und anderer Daten von ECU zu ECU verwendbar.

Ein besonderes Problem ergibt sich im Zusammenhang mit Lastzügen, welche zwei oder mehr Anhängerfahrzeuge aufweisen. Die Anhängerfahrzeuge können unterschiedliche Ladung aufgenommen haben und/oder unterschiedliche Schwerpunkte aufweisen. In Kurven und in kritischen Fahrsituationen kann eine Umkippgefahr für einzelne Anhängerfahrzeuge bestehen, ohne dass die Gefahr im Zugfahrzeug erkennbar ist. Besonders kritisch sind Ausweichmanöver, bei denen mit hoher Geschwindigkeit erst in die eine Richtung und dann in die andere Richtung gelenkt wird.

Aus der US 7,971,942 B2 ist ein Bremssystem für Lastzüge mit zwei Anhängerfahrzeugen bekannt, bei dem eine wegen mangelnder Stabilität erfolgte Bremsung des ersten Anhängers ein Bremssignal an weitere angehängte Anhänger leitet. Bei Umkippgefahr des letzten Anhängers ist die Regelung wirkungslos.

Aus der WO 2008/114039 A1 ist ein Lastzug mit zwei Anhängerfahrzeugen bekannt, bei dem nur einer der Anhänger mit einem System zum eigenständigen Bremsen ausgestattet ist, der andere Anhänger aber zumindest über ein Antiblockiersystem verfügt. Die ECU des eigenständig bremsenden Anhängers, etwa bei instabilem Fahrzustand, steuert ein ABS-Ventil des zweiten Anhängers an. Eine situationsabhängige, differenziertere Regelung der Bremsen des zweiten Anhängers ist damit nicht möglich.

### Einschub zum Stand der Technik

Die Dokumente GB 2447689 A und US 6,225,894 B1 offenbaren Verfahren zur Stabilitätsregelung von Fahrzeugzügen bestehend aus einem Zugfahrzeug und mehreren Anhängefahrzeugen.

Aufgabe der vorliegenden Erfindung ist die Aufrechterhaltung der Stabilität des fahrenden Lastzuges. Insbesondere sollen die bekannten Verfahren verbessert werden.

Zur Lösung der Aufgabe weist das erfindungsgemäße Verfahren die Merkmale des Anspruchs 1 auf. Bei der Erkennung der Umkippgefahr für eines der an das Zugfahrzeug anschließenden Fahrzeuge wird über die Datenschnittstelle ein Signal gesendet, aus dem hervorgeht, dass das Stabilitätssystem für das kippgefährdete Fahrzeug aktiv ist. Außerdem werden dann ein oder mehrere der vorlaufenden Fahrzeuge automatisch gebremst. Sobald das Stabilitätssystem des kippgefährdeten Fahrzeugs aktiv ist, versendet die ECU dieses Fahrzeugs typischerweise eine genormte Botschaft, aus der sich diese Aktivität ergibt. Die Botschaft wird als "VDC active" bezeichnet, wobei VDC für Vehicle Dynamic Control steht. Eine über die CAN-Datenschnittstelle verschickte Botschaft hat einen sogenannten Identifier, welcher den Absender bezeichnet. Jedes vorlaufende Fahrzeug bzw. dessen ECU kann aus der genannten Botschaft und aus dem Identifier erkennen, dass bei dem nachlaufenden Fahrzeug das Stabilitätssystem aktiv ist und kann erfindungsgemäß in Abhängigkeit davon und von weiteren Parametern das eigene Fahrzeug bremsen. Hierzu muss die ECU des Fahrzeugs nur mit einer geeigneten Software versehen sein. Die für das Verfahren erforderlichen Daten stehen zur Verfügung und werden üblicherweise über die bekannten Datenschnittstellen zur Verfügung gestellt. Vorzugsweise wird zumindest das dem kippgefährdeten Fahrzeug unmittelbar vorlaufende Fahrzeug gebremst. Es können aber auch weitere vorlaufende Fahrzeuge mitgebremst werden. Möglich ist auch das Bremsen nur der vorlaufenden Fahrzeuge, welche nicht unmittelbar dem kippgefährdeten Fahrzeug vorlaufen, etwa das Zugfahrzeug oder das erste Anhängerfahrzeug in einem Lastzug mit drei Anhängerfahrzeugen und einem kippgefährdeten dritten Anhängerfahrzeug.

Vorteilhafterweise werden nur kurvenäußere Räder des vorlaufenden Fahrzeugs gebremst. Dies erhöht die Stabilität des vorlaufenden Fahrzeugs und des Lastzuges. Es können aber auch alle Räder des vorlaufenden Fahrzeugs gebremst werden. Dadurch wird eine stärkere Geschwindigkeitsreduzierung erreicht, so dass ein stabiler Zustand des Lastzugs insgesamt schneller wieder herstellbar ist.

Nach einem weiteren Gedanken der Erfindung werden kurvenäußere Räder des vorlaufenden Fahrzeugs stärker gebremst als kurveninnere Räder. Dies ergibt einen guten Kompromiss zwischen dem möglichst schnellen Abbremsen des Lastzugs insgesamt und der erhöhten Stabilität des vorlaufenden Fahrzeugs.

Erfindungsgemäß kann das vorlaufende Fahrzeug mit geringerem Bremsdruck als das kippgefährdete Fahrzeug gebremst werden, insbesondere nur mit bis zu 50% vom Bremsdruck des kippgefährdeten Fahrzeugs. Dadurch wird ein Auflaufen des kippgefährdeten Fahrzeugs auf das vorlaufende Fahrzeug vermieden.

Die Botschaft, aus welcher sich das aktive Stabilitätssystem des kippgefährdeten Fahrzeugs ergibt, wird vorteilhafterweise über den CAN-Bus zum vorlaufenden Fahrzeug und/oder an andere Fahrzeuge des Lastzuges übertragen. Möglich ist auch eine Übertragung direkt zum Zugfahrzeug und von dort weiter an andere Anhängerfahrzeuge, soweit diese gegenüber dem kippgefährdeten Fahrzeug vorlaufend sind. Alternativ kann das Signal auch über einen PLC-Bus oder ein anderes Datenübertragungssystem übertragen werden.

Ein erfindungsgemäßes Bremssystem weist die Merkmale des Anspruchs 8 auf. Das Bremssystem ist so eingerichtet, dass die ECU des Fahrzeugs bremst, wenn Daten eines nachlaufenden Fahrzeugs eine Umkippgefahr des nachlaufenden Fahrzeugs signalisieren und/oder wenn Daten des nachlaufenden Fahrzeugs signalisieren, dass dessen Stabilitätssystem aktiv ist.

Schließlich ist Gegenstand der Erfindung auch ein Fahrzeug mit einem entsprechenden Bremssystem. Insbesondere handelt es sich um ein Anhängerfahrzeug. Möglich ist aber auch die Ausstattung eines Zugfahrzeugs mit dem Bremssystem. Das Fahrzeug weist zusammen mit dem elektronischen Bremssystem oder als Teile desselben eine ECU, Datenleitungen zur Verbindung mit vorlaufenden und nachlaufenden Fahrzeugen und vorzugsweise mindestens einen CAN-Router oder eine vergleichbare Einrichtung zur Weiterleitung von Daten auf.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: einen Lastzug, bei dem ein hinteres Anhängerfahrzeug im Bereich von kurvenäußeren Rädern gebremst wird,
- Fig. 2: den Lastzug gemäß Figur 1, jedoch zusätzlich mit bremsendem ersten Anhänger,
- Fig. 3: einen Lastzug mit Zugfahrzeug und drei Anhängerfahrzeugen.

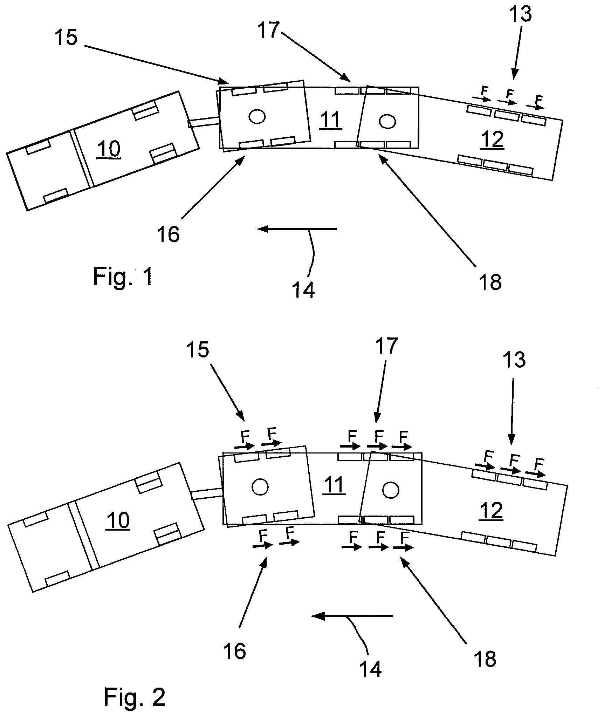

Ein in den Figuren 1 und 2 gezeigter Lastzug besteht aus einem Zugfahrzeug 10, einem ersten Anhängerfahrzeug 11 und einem zweiten Anhängerfahrzeug 12. Alle Fahrzeuge weisen elektropneumatische Bremsen auf und sind mit einem elektronischen Bremssystem EBS ausgestattet. Zum elektronischen Bremssystem gehört in jedem Fahrzeug zumindest eine elektronische Schalteinheit ECU, wobei die ECUs über eine Datenschnittstelle miteinander kommunizieren. In Fahrzeugen für den europäischen Markt ist für die Datenübertragung von Fahrzeug zu Fahrzeug bzw. von ECU zu ECU typischerweise ein CAN-Bus vorgesehen. Für andere Märkte können andere Arten der Datenübertragung vorgesehen sein, etwa ein Power Line Carrier in Fahrzeugen für Nordamerika. Im Zusammenhang mit der Erfindung ist nur relevant, dass eine Datenverbindung von ECU zu ECU besteht und so Signale bzw. Daten von Fahrzeug zu Fahrzeug übertragbar sind.

Das elektronische Bremssystem EBS beinhaltet eine gewisse Eigenständigkeit im Bremsverhalten eines jeden Fahrzeugs 10, 11, 12. So enthält das EBS eine Stabilitätskontrolle und leitet selbständig Bremsmaßnahmen zur Unterstützung und Beibehaltung stabiler Fahrzustände ein. Besonders kritisch ist die Umkippgefahr bei Kurvenfahrten durch plötzliche Ausweichmanöver oder aus anderen Gründen. Durch unterschiedliche Beladung können die Fahrzeuge unterschiedliche Schwerpunkte aufweisen und in einer Fahrsituation unterschiedlich reagieren. Zusätzlich unterscheiden sich die Fahrzeuge in ihrer Geometrie und in ihrem Fahrverhalten, auch unabhängig von Beladung und Schwerpunkt.

Die in jedem Fahrzeug vorgesehene ECU weist vorzugsweise einen Querbeschleunigungssensor auf. Aus den gemessenen Querbeschleunigungswerten kann in Verbindung mit weiteren Daten, etwa Achslastsensoren oder Radlastsensoren, eine Kippgefahr erkannt werden. Achslasten oder Radlasten können über die Drücke in Luftfedern auf einfache Weise ausgelesen werden.

Eine Umkippgefahr ist außerdem berechenbar anhand der Daten von ohnehin vorgesehenen, nicht gezeigten Raddrehzahlsensoren. Diese sind Kernkomponenten eines Antiblockiersystems. Durch Vergleich der Raddrehzahlen, gegebenenfalls in Verbindung mit aktuellen Bremsdrücken, ist erkennbar, ob bei Kurvenfahrten kritische Fahrsituationen oder sogar eine Umkippgefahr vorliegen. In diesem Fall bremst das EBS des betreffenden Fahrzeugs die kurvenäußeren Räder. In Figur 1 ist dieser Fall für das zweite Anhängerfahrzeug 12 eingezeichnet. Dort wirken auf äußere Räder 13 Bremskräfte F gegen die Fahrtrichtung gemäß Pfeil 14. Durch das Bremsen der äußeren Räder 13 wird der Lastzug insgesamt langsamer und die Umkippgefahr wird reduziert. Allerdings ist der Bremseffekt nicht optimal, da nur etwa 14% der insgesamt vorhandenen Räder des Lastzugs gebremst werden.

Um den Bremseffekt zu verbessern, reagiert das EBS des dem zweiten Anhängerfahrzeug 12 vorlaufenden ersten Anhängerfahrzeugs 11 und unterstützt die Bremsung. Möglich ist dies, da die ECU des zweiten Anhängerfahrzeugs 12 bei Umkippgefahr nicht nur die eigenen Bremsen aktiviert, sondern zugleich über die Datenverbindung an die anderen Fahrzeuge signalisiert, dass die Stabilitätskontrolle aktiv ist. Zusammen mit dem Signal wird ein sogenannter Identifier übersandt, aus dem erkennbar ist, welches Fahrzeug das Signal verschickt hat. Das EBS im zum instabilen zweiten Anhängerfahrzeug 12 vorlaufenden ersten Anhängerfahrzeug 11 reagiert auf die erhaltene Nachricht und bremst das erste Anhängerfahrzeug 11. Die Bremsung des vorlaufenden Anhängerfahrzeugs 11 ist eine unterstützende Maßnahme für die vorangegangene Bremsung des nachlaufenden zweiten Anhängerfahrzeugs 12 zur Verringerung oder Beseitigung der Umkippgefahr. Die Bremsung des vorlaufenden ersten Anhängerfahrzeugs kann deshalb als abgeleitete Bremsung bezeichnet werden. Im vorliegenden Fall weist das erste Anhängerfahrzeug 11 vier Radgruppen auf, nämlich eine vordere äußere Radgruppe 15, eine vordere innere Radgruppe 16, eine hintere äußere Radgruppe 17 und eine hintere innere Radgruppe 18. Die Begriffe "innere" und "äußere" beziehen sich auf die aktuell gefahrene Kurve des Lastzugs, wie schon bei der Bezeichnung der äußeren Radgruppe 13 des zweiten Anhängerfahrzeugs 12.

Im vorliegenden Fall werden die Radgruppen 15 bis 18 des ersten Anhängerfahrzeugs 11 gleichstark abgebremst, zumindest dann, wenn für das erste Anhängerfahrzeug 11 keine Umkippgefahr besteht. Dabei ist der Bremsdruck so gewählt, dass das zweite Anhängerfahrzeug nicht aufläuft. Vorzugsweise ist der Bremsdruck im vorlaufenden Anhängerfahrzeug 11 geringer als im Anhängerfahrzeug 12 oder sogar nur halb so hoch. Gleichwohl ergibt sich für den Lastzug insgesamt eine deutlich stärkere Bremsung als nur durch die äußeren Räder 13 des zweiten Anhängerfahrzeugs 12.

Alternativ kann vorgesehen sein, dass auch im vorlaufenden Anhängerfahrzeug 11 nur bestimmte Räder gebremst werden, vorzugsweise die äußeren Radgruppen 15, 17. In der in Figur 2 gezeigten Konstellation mit zusätzlich bremsenden Radgruppen 15 bis 18 am ersten Anhängerfahrzeug 11 werden etwa 59% der vorhandenen Räder des Lastzuges gebremst. Sofern nur die äußeren Radgruppen 15, 17 mitbremsen, werden immerhin etwa 37% der Räder gebremst.

Ergänzend kann vorgesehen sein, dass nicht nur das dem instabilen Fahrzeug unmittelbar vorlaufende Fahrzeug mitbremst, sondern dass auch weiter davor fahrende Fahrzeuge eigenständig reagieren und bremsen. In diesem Fall wäre es das Zugfahrzeug 10. In Lastzügen mit mehr als zwei Anhängerfahrzeugen könnten auch weitere Anhängerfahrzeuge mitbremsen. Mindestvoraussetzung für die Funktion ist lediglich, dass die beteiligten Fahrzeuge ein elektronisches Bremssystem aufweisen, über eine Datenschnittstelle Daten empfangen und senden können, und die ECUs zur Durchführung des Verfahrens eine entsprechende Software aufweisen.

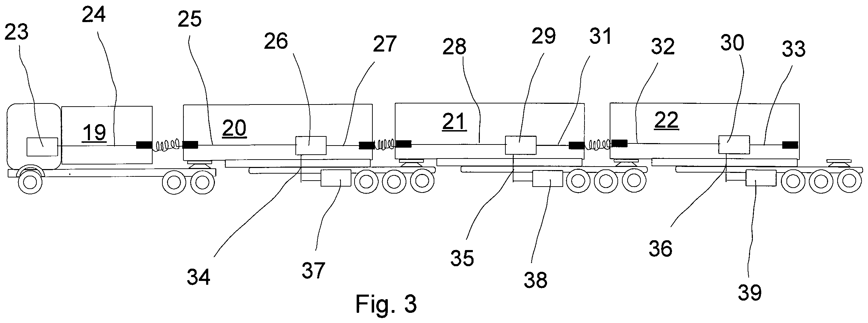

Ein Beispiel für einen Lastzug mit Zugfahrzeug 19 und drei Anhängerfahrzeugen 20, 21, 22 zeigt Figur 3. Eingezeichnet sind nur Datenverbindungen zwischen den Fahrzeugen, nicht aber vorhandene Pneumatikleitungen für die Druckluftbremsen. Eine ECU 23 des Zugfahrzeugs 19 ist über Datenleitungen 24, 25 mit einem CAN-Router 26 im ersten Anhängerfahrzeug 20 verbunden. Analog dazu besteht eine Verbindung über Datenleitungen 27, 28 vom CAN-Router 26 zu einem CAN-Router 29 im zweiten Anhängerfahrzeug 21. In der selben Weise ist ein CAN-Router 30 im dritten Anhängerfahrzeug 22 über Datenleitungen 31, 32 mit dem CAN-Router 29 verbunden. Schließlich erstreckt sich vom CAN-Router 30 eine Datenleitung 33 zum hinteren Ende des dritten Anhängerfahrzeugs 22.

Von jedem der CAN-Router 26, 29, 30 verläuft eine Datenleitung 34, 35, 36 zu einer ECU 37, 38, 39 des jeweiligen Anhängerfahrzeugs. Die ECUs 37, 38, 39 enthalten zumindest die Funktionalität eines Bremsensteuergerätes des elektronischen Bremssystems und steuern die Betätigung der nicht gezeigten Bremsen des jeweiligen Anhängerfahrzeugs 20, 21, 22 in Abhängigkeit von den über die Datenleitungen empfangenen Signale. Somit ist jedes Anhängerfahrzeug 20, 21, 22 mit einer ECU, einem CAN-Router, Datenleitungen zur Verbindung mit vorlaufenden und nachlaufenden Fahrzeugen und mit weiteren Komponenten eines elektronischen Bremssystems versehen.

Die Datenleitungen sind für die Datenübertragung gemäß ISO 11992 (CAN-Bus) vorgesehen, ebenso die CAN-Router. Es handelt sich demnach um separate Leitungen, getrennt von den üblichen Starkstromkabeln zur Übertragung elektrischer Energie von Fahrzeug zu Fahrzeug. In analoger Weise können aber auch Daten bzw. digitale Signale auf Starkstromleitungen übertragen und verteilt werden, beispielsweise nach dem Prinzip des Power Line Carrier, wie es aus den für den nordamerikanischen Markt vorgesehenen Fahrzeugen bekannt ist.

Jedes Anhängerfahrzeug 20, 21, 22 kann einen nicht gezeigten Querbeschleunigungssensor aufweisen, insbesondere innerhalb der jeweiligen ECU 37, 38, 39. Erkennt beispielsweise die ECU 38 des zweiten Anhängerfahrzeugs 21 aufgrund der Querbeschleunigung oder aufgrund der Auswertung von nicht gezeigten Raddrehzahlsensoren eine Umkippgefahr, wird die genormte Botschaft "VDC active" über den CAN-Bus bzw. die Datenleitungen zusammen mit einer Absenderangabe an die anderen Fahrzeuge 19, 20, 22 gesendet. Zugleich steuert die ECU 38 nicht gezeigte Bremsen des zweiten Anhängerfahrzeugs 21 an, zumindest kurvenäußere Bremsen. Das hierzu vorlaufende Anhängerfahrzeug 20 erkennt den Bremsvorgang des nachlaufenden Anhängefahrzeugs 21 und den Grund hierfür und betätigt die eigenen Bremsen als unterstützende Maßnahme, insbesondere die Bremsen der kurvenäußeren Räder oder die Bremsen aller Räder. Dabei wird die Bremskraft dosiert, um ein Auflaufen der nachlaufenden Anhängerfahrzeuge 21, 22 zu verhindern. Das letzte Anhängerfahrzeug 22 kann in diesem Fall ebenfalls mitgebremst werden.

Aufgrund der bestehenden Datenverbindung können auch noch weiter vorlaufende Fahrzeuge zur Unterstützung bremsen, in diesem Fall das Zugfahrzeug 19, sofern dies gewünscht ist.

## Patentansprüche

1. Verfahren zum Abbremsen einer Kombination von mehreren miteinander gekoppelten Fahrzeugen (10, 11, 12), wobei die Fahrzeuge jeweils elektronisch gesteuerte Bremsen, insbesondere elektropneumatische Bremsen, ein Stabilitätssystem zum Erkennen einer Umkippgefahr, jeweils mindestens eine elektronische Schalteinheit ECU und eine Datenschnittstelle zur Entgegennahme und zum Versenden von Daten aufweisen, und wobei im Falle der Erkennung einer Umpkippgefahr für eines der Fahrzeuge (11, 12) letzteres automatisch bremst, insbesondere kurvenäußere Räder gebremst werden, wobei bei der Erkennung der Umkippgefahr für das eine Fahrzeug (12) über die Datenschnittstelle ein Signal gesendet wird, aus dem hervorgeht, dass das Stabilitätssystem des kippgefährdeten Fahrzeugs aktiv ist, und dass dann ein oder mehrere vorlaufende Fahrzeuge (11) automatisch gebremst werden, **dadurch gekennzeichnet, dass** das vorlaufende Fahrzeug (10, 11) mit geringerem Bremsdruck gebremst wird, insbesondere nur mit bis zu 50% vom Bremsdruck des kippgefährdeten Fahrzeugs.

2. Verfahren nach Anspruch 1, **dadurch gekennzeichnet, dass** nur kurvenäußere Räder des vorlaufenden Fahrzeugs (11) gebremst werden.

3. Verfahren nach Anspruch 1, **dadurch gekennzeichnet, dass** alle Räder des vorlaufenden Fahrzeugs (10, 11) gebremst werden.

4. Verfahren nach Anspruch 1 oder einem der weiteren Ansprüche, **dadurch gekennzeichnet, dass** kurvenäußere Räder des vorlaufenden Fahrzeugs (10, 11) stärker gebremst werden als kurveninnere Räder.

5. Verfahren nach Anspruch 1 oder einem der weiteren Ansprüche, **dadurch gekennzeichnet, dass** das Signal über einen CAN-Bus übertragen wird.

6. Verfahren nach Anspruch 1 oder einem der weiteren Ansprüche, **dadurch gekennzeichnet, dass** das Signal über einen PLC-Bus übertragen wird.

7. Bremssystem für ein Fahrzeug (10, 11, 12) das das Verfahrens nach einem der voranstehenden Ansprüche durchführt, mit elektronisch gesteuerten Bremsen, insbesondere elektropneumatischen Bremsen, einer elektronischen Schalteinheit (ECU) zur Steuerung der Bremsen, insbesondere einem Stabilitätssystem zur Erkennung einer Umkippgefahr, und einer Datenschnittstelle zum Empfangen von Daten anderer Fahrzeuge, wobei die ECU das Fahrzeug (10, 11) bremst, wenn Daten eines nachlaufenden Fahrzeugs (12) eine Umkippgefahr des nachlaufenden Fahrzeugs (12) signalisieren und/oder wenn Daten des nachlaufenden Fahrzeugs (11, 12) signalisieren, dass dessen Stabilitätssystem aktiv ist.

8. Fahrzeug mit einem Bremssystem nach Anspruch 7, insbesondere Anhängerfahrzeug.

## Claims

1. Method for braking a combination of a plurality of vehicles (10, 11, 12) that are coupled to one another, wherein the vehicles each comprise electronically controlled brakes, especially electropneumatic brakes, a stability system for detecting a risk of tipping, at least one electronic switching unit ECU each and a data interface for receiving and for sending data, and wherein in the case of detecting a risk of tipping for one of the vehicles (11, 12) the latter automatically brakes, especially wheels on the outside of a turn being braked, wherein on detecting the risk of tipping for the one vehicle (12) a signal is sent by means of the data interface indicating that the stability system of the vehicle at risk of tipping is active, and that one or a plurality of leading vehicles (11) is/are then automatically braked, **characterized in that** the leading vehicle (10, 11) is braked with lower brake pressure, especially only with up to 50% of the brake pressure of the vehicle at risk of tipping.

2. Method according to Claim 1, **characterized in that** only wheels of the leading vehicle (11) on the outside of a turn are braked.

3. Method according to Claim 1, **characterized in that** all wheels of the leading vehicle (10, 11) are braked.

4. Method according to Claim 1 or any one of the other claims, **characterized in that** wheels of the leading vehicle (10, 11) on the outside of a turn are braked more strongly than wheels on the inside of a turn.

5. Method according to Claim 1 or any one of the other claims, **characterized in that** the signal is transferred by means of a CAN bus.

6. Method according to Claim 1 or any one of the other claims, **characterized in that** the signal is transferred by means of a PLC bus.

7. Brake system for a vehicle (10, 11, 12), which carries out the method according to any one of the preceding claims, with electronically controlled brakes, especially electropneumatic brakes, an electronic switching unit (ECU) for controlling the brakes, especially a stability system for detecting a risk of tipping, and a data interface for receiving the data of other vehicles, wherein the ECU brakes the vehicle (10, 11) if the data of a following vehicle (12) signals a risk of tipping of the following vehicle (12) and/or if the data of the following vehicle (11, 12) signals that its stability system is active.

8. Vehicle with a brake system according to Claim 7, especially a trailer vehicle.

## Revendications

1. Procédé de freinage d'une combinaison de plusieurs véhicules (10, 11, 12) accouplés les uns aux autres, les véhicules présentant chacun des freins à commande électronique, en particulier des freins électropneumatiques, un système de stabilité pour détecter un risque de renversement, à chaque fois au moins une unité de commutation électronique ECU et une interface de données pour la réception et l'envoi de données, et dans lequel, dans le cas de la détection d'un risque de renversement pour l'un des véhicules (11, 12), ce dernier est automatiquement freiné, en particulier les roues situées à l'extérieur dans le virage sont freinées, dans lequel, lors de la détection du risque de renversement pour l'un des véhicules (12), un signal est envoyés par le biais de l'interface de données, lequel indique que le système de stabilité du véhicule risquant de se renverser est actif et qu'un ou plusieurs véhicules en avant (11) sont ensuite freinés automatiquement, **caractérisé en ce que** le véhicule en avant (10, 11) est freiné avec une plus faible pression de freinage, en particulier seulement avec jusqu'à 50 % de la pression de freinage du véhicule risquant de se renverser.

2. Procédé selon la revendication 1, **caractérisé en ce que** seulement les roues du véhicule en avant (11) situées à l'extérieur dans le virage sont freinées.

3. Procédé selon la revendication 1, **caractérisé en ce que** toutes les roues du véhicule en avant (10, 11) sont freinées.

4. Procédé selon la revendication 1 ou selon l'une quelconque des autres revendications, **caractérisé en ce que** les roues du véhicule en avant (10, 11) situées à l'extérieur dans le virage sont freinées plus fortement que les roues situées à l'intérieur dans le virage.

5. Véhicule selon la revendication 1 ou selon l'une quelconque des autres revendications, **caractérisé en ce que** le signal est transmis par le biais d'un bus CAN.

6. Procédé selon la revendication 1 ou selon l'une quelconque des autres revendications, **caractérisé en ce que** le signal est transmis par le biais d'un bus PLC.

7. Système de freinage pour un véhicule (10, 11, 12) qui met en oeuvre le procédé selon l'une quelconque des revendications précédentes, comprenant des freins à commande électronique, en particulier des freins électropneumatiques, une unité de commutation électronique (ECU) pour commander les freins, en particulier un système de stabilité pour détecter un risque de renversement, et une interface de données pour recevoir des données d'autres véhicules, l'ECU freinant le véhicule (10, 11) lorsque des données d'un véhicule en arrière (12) signalent un risque de renversement du véhicule en arrière (12) et/ou lorsque des données du véhicule en arrière (11, 12) signalent que son système de stabilité est actif.

8. Véhicule comprenant un système de freinage selon la revendication 7, en particulier remorque.
